# EUROPÄISCHE PATENTSCHRIFT

(11) **EP 3 353 462 B1**
(45) Veröffentlichungstag und Bekanntmachung des Hinweises auf die Patenterteilung: **02.10.2024**
(21) Anmeldenummer: 16750146.9
(22) Anmeldetag: 03.08.2016
(51) Int. Cl.: F17C 5/06

(54) **SERVICEVORRICHTUNG FÜR EIN DRUCKBEHÄLTERSYSTEM**
MAINTENANCE SYSTEM FOR A HIGH PRESSURE GAS TANK SYSTEM
SYSTÈME DE MAINTENANCE POUR UN SYSTÈME DE STOCKAGE DU GAZ A HAUTE PRESSION

(30) Priorität: 23.09.2015 DE 102015218235
(43) Veröffentlichungstag der Anmeldung: 01.08.2018
(73) Patentinhaber: Bayerische Motoren Werke Aktiengesellschaft, 80809 München (DE)
(72) Erfinder: PELGER, Andreas, 85737 Ismaning (DE); SZOUCSEK, Klaus, 85778 Haimhausen (DE)
(86) Internationale Anmeldenummer: PCT/EP2016/068496
(87) Internationale Veröffentlichungsnummer: WO 2017/050473

(56) Entgegenhaltungen:
- WO-A2-2011/092562
- DE-A1- 102008 019 594
- DE-T5- 112013 002 339
- US-A1- 2013 139 897

## Beschreibung

Die hier offenbarte Technologie betrifft eine Servicevorrichtung für ein Druckbehältersystem, insbesondere ein kryogenes Druckbehältersystem. Ferner ist ein Verfahren zum Service eines Druckbehältersystems offenbart.

Kryogene Druckbehältersysteme sind aus dem Stand der Technik bekannt. Sie werden bspw. für Kraftfahrzeuge eingesetzt, in denen ein unter Umgebungsbedingungen gasförmiger Kraftstoff bzw. Brennstoff tiefkalt und somit im flüssigen oder überkritischen Aggregatszustand gespeichert wird. Beispielsweise offenbart die EP 1 546 601 B1 einen solchen Druckbehälter. Zur Betankung werden spezielle Betankungskupplungen eingesetzt, wie sie beispielsweise in den Druckschriften DE 19727652 A1 und WO05/077812 A1 gezeigt ist. Die DE 11 2013,002 339 T5, WO 2011/092562 A2 und US 2013/01239897 A1 offenbaren Betankungsvorrichtungen.

Bei der Wartung von Kraftfahrzeugen mit Druckbehältersystemen müssen bestimmte Tätigkeiten mit besonderer Vorsicht durchgeführt werden. Schließlich soll verhindert werden, dass sich zündfähige Gasgemische mit dem Brennstoff (z.B. Wasserstoff) bilden. Gemeint sind beispielsweise:
- Entleeren des Brennstoffleitungssystems, z.B. der Vorlaufleitung zwischen dem Druckbehälter und der Brennstoffzelle;
- Entleeren des Druckbehälters (Enttanken);
- Inertisieren des Druckbehälters;
- Überprüfen der Dichtigkeit des Druckbehälters;

Das Risiko einer Fehlbedienung kann durch Qualifizierung der Wartungsmitarbeiter reduziert werden. Wenn diese Wartungsarbeiten jedoch manuell durchgeführt werden, ist eine Fehibediehung nicht ganz auszuschließen. Ferner sind die einzelnen Schritte zeitintensiv. Um die Gefahr von Kaltverbrennungen zu reduzieren muss das kryogene Druckbehältersystem bzw. der kryogen gespeicherte Brennstoff derzeit vor Beginn der Wartungsarbeiten auf Umgebungstemperatur aufgewärmt werden.

Es ist eine Aufgabe der hier offenbarten Technologie, die Nachteile der vorbekannten Lösungen zu verringern oder zu beheben. Weitere Aufgaben ergeben sich aus den vorteilhaften Effekten der hier offenbarten Technologie. Die Aufgabe(n) wird/werden gelöst durch den Gegenstand der unabhängigen Patentansprüche. Die abhängigen Ansprüche stellen bevorzugte Ausgestaltungen dar.

Die hier offenbarte Technologie betrifft eine Servicevorrichtung für ein Druckbehältersystem eines Kraftfahrzeuges. Ein solches Druckbehältersystem umfasst mindestens einen Druckbehälter zur Speicherung von Brennstoff für ein Kraftfahrzeug. Ein solcher Druckbehälter kann beispielsweise ein kryogener Druckbehälter oder ein Hochdruckgasbehälter sein.

Hochdruckgasbehältersysteme (werden nachstehend auch als "CGH2-System" bezeichnet) sind ausgebildet, im Wesentlichen bei Umgebungstemperaturen Brennstoff dauerhaft bei einem Druck von über ca. 350 barü, ferner bevorzugt von über ca. 500 barü und besonders bevorzugt von über ca. 700 barü zu speichern.

Ein kryogener Druckbehälter (werden auch "CcH2-Druckbehälter" genannt) kann Brennstoff im flüssigen oder überkritischen Aggregatszustand speichern. Ein kryogener Druckbehälter ist insbesondere geeignet, den Brennstoff bei kryogenen Temperaturen zu speichern, die deutlich unter der Betriebstemperatur (gemeint ist der Temperaturbereich der Fahrzeugumgebung, in dem das Fahrzeug betrieben werden soll) des Kraftfahrzeuges liegt, beispielsweise mind. 50 Kelvin, bevorzugt mindestens 100 Kelvin bzw. mindestens 150 Kelvin unterhalb der Betriebstemperatur des Kraftfahrzeuges (i.d.R. ca. -40°C bis ca. +85°C). Der Brennstoff kann beispielsweise Wasserstoff sein, der bei Temperaturen von ca. 34 K bis 360 K im kryogenen Druckbehälter gespeichert wird. Der Druckbehälter kann in einem Kraftfahrzeug eingesetzt werden, das beispielsweise mit komprimiertem ("Compressed Natural Gas" = CNG) oder verflüssigtem (LNG) Erdgas betrieben wird. Der kryogene Druckbehälter kann insbesondere einen Innenbehälter umfassen, der ausgelegt ist für Speicherdrücke bis ca. 350 barü, bevorzugt bis ca. 500 barü, und besonders bevorzugt bis ca. 700 barü. Insbesondere kann die Servicevorrichtung eingerichtet sein, an ein kryogenes Druckbehältersystem angeschlossen zu werden. Hierzu müssen Materialien und Komponenten vorgesehen sein, die im kryogenen Temperaturfenster eingesetzt werden können (z.B. der Brennstoffspeicher (s.u.) und die Betankungskupplung). Ferner sind zusätzliche Vorkehrungen, wie beispielsweise zusätzliche Isolationsmaßnahmen zweckmäßig.

Eine Servicevorrichtung ist eine Vorrichtung, die für den Service eines Kraftfahrzeuges eingesetzt wird, beispielsweise bei Reparaturarbeiten und/oder Wartungsarbeiten bzw. regelmäßigen Kontrollen. Nicht umfasst ist mit dem Begriff Servicevorrichtung die normale Betankung eines Druckbehältersystems an einer Tankstelle.

Die Servicevorrichtung umfasst ein servicevorrichtungsseitiges Kupplungsteil (nachstehend wird vereinfachend auch der Begriff "Betankungskupplungsstecker" verwendet, obwohl auch eine Kupplungsdose als servicevorrichtungsseitiges Kupplungsteil anzusehen ist), der eingerichtet ist, mit einem korrespondierenden kraftfahrzeugseitigen Kupplungsteil (nachstehend wird vereinfachend auch der Begriff "Betankungsdose" verwendet, obwohl auch ein Kupplungsstecker als servicevorrichtungsseitiges Kupplungsteil anzusehen ist) des Kraftfahrzeuges verbunden zu werden. Selbstverständlich kann es sich dabei um einen Betankungskupplungsteil von einer Betankungskupplung handeln, wie er von der Betankung (CcH2 und/oder CGH2) an der Tankstelle bereits bekannt ist, beispielsweise ein Stecker wie er in der DE 19727652 A1 oder der WO05/077812 A1 gezeigt ist.

Eine CcH2-Betankungskupplung kann ferner einen Cold Finger aufweisen. Vorteilhaft bilden die Betankungskupplungsteile nach der Koppelung einen geschlossenen Raum aus. Zweckmäßig kann das servicevorrichtungsseitige Kupplungsteil einen Cold Finger umfassen, der in das kraftfahrzeugseitige Kupplungsteil zumindest teilweise eingeführt wird. Der Cold Finger ist dabei ein servicevorrichtungsseitige Kupplungsteil aufgenommener und gegenüber der Umgebung wärmeisolierter Stab, der in seinem Inneren den kryogenen Brennstoff führt. Er kann während des Kupplungsvorganges im Kupplungsteil zurückversetzt angeordnet sein, bevor er nach der Koppelung in das kraftfahrzeugseitige Kupplungsteil verfahren wird. Dementsprechend ist zweckmäßig auch ein (elektrischer und/oder pneumatischer) Antrieb für den Cold Finger vorgesehen. Somit lassen sich Kondensatbildung oder gar Vereisung im Bereich der Betankungskupplung verringern oder sogar vermeiden. Vorteilhaft kann ferner eine Betankungskupplungsheizvorrichtung vorgesehen sein.

Ferner umfasst die Servicevorrichtung eine Steuerung zur Ansteuerung des Druckbehältersystems. Die Steuerung kann eine Steuerung (eng. open loop control) und/oder eine Regelung (eng. closed loop control) umfassen.

Vorzugsweise ist die Steuerung Bestandteil der Servicevorrichtung. Zweckmäßig handelt es sich also um eine elektrische bzw. elektronische Ansteuerung. Diese kann beispielsweise dergestalt sein, dass die Servicevorrichtung Reglersignale bzw. Steuersignale an das Steuergerät des Druckbehältersystems sendet, woraufhin das Steuergerät des Druckbehältersystems dann die Aktuatorik (z.B. etwaige Ventile) des Druckbehältersystems steuert bzw. regelt. Vorteilhaft kann somit mit bereits verbauter Aktuatorik im Servicefall der Zustand des Druckbehälters beeinflusst werden (z.B. bedrückt, druckentlastet, etc.) Alternativ könnte die Steuerfunktionalität auch im Kraftfahrzeug mit integriert sein oder einer externen Rechnereinheit mit entsprechender Software. Die Servicevorrichtung bzw. die Steuerung kann insbesondere eingerichtet sein die Fahrzeugdaten (z.B. Tankinformationen) zu verarbeiten und/oder die Aktuatorik und Sensorik des Kraftfahrzeugs oder bevorzugt an beiden Systemen (Kraftfahrzeug und Servicevorrichtung) anzusteuern. Insbesondere werden entsprechende elektrische Reglersignale bzw. Steuersignale an die Aktuatorik des Druckbehältersystems gesendet. Als Steuersignal ist hier nicht das Betanken eines Druckbehälters durch eine bedruckte Betankungsleitung anzusehen.

Die Steuerung kann insbesondere eingerichtet sein, das Absperrventil des Druckbehälters oder ein anderes Ventil des Druckbehältersystems anzusteuern.

Die Steuerung kann eingerichtet sein, Informationen über den Zustand des Druckbehältersystems zu verarbeiten. Vorteilhaft werden beispielsweise Druck-, Temperatur- und/oder Füllstandsinformationen von der Steuerung oder weitere Informationen verarbeitet. Aus diesen Informationen können beispielsweise Steuerbefehle für das Druckbehältersystem generiert werden. Ferner können diese Informationen zur Diagnose genutzt werden. Zu diesem Zweck kann die Servicevorrichtung vorteilhaft eine Brennstoff-Analysevorrichtung aufweisen. Eine Brennstoff-Analysevorrichtung ist eingerichtet, den im Druckbehältersystem gespeicherten Brennstoff zu analysieren. Beispielsweise kann die Servicevorrichtung mindestens ein Sensor umfassen, der die Reinheit des Brennstoffes (z.B. Wasserstoffreinheit) bestimmt. Bei Wartungsarbeiten kann der Druckbehälter mit einem inerten Gas befüllt werden. Für den regulären Betrieb des Kraftfahrzeuges mit einer Brennstoffzelle ist aber eine bestimmte Wasserstoffgehalt bzw. Reinheit erforderlich. Um diese zu erreichen wird ein Druckbehältersystem (insbesondere nach einem Serviceeinsatz) durch eine Druckwechselspülung quasi "gereinigt". Eine Druckwechselspülung ist ein Vorgang, bei dem das Druckbehältersystem mehrfach (z.B. drei oder fünf Wiederholungen) mit Brennstoff bis zu einem gewissen Füllgrad bzw. Fülldruck gefüllt und dann wieder entleert wird.

Aus den vorgenannten Zustandsinformationen sowie weiteren Informationen, z.B. den Daten der Brennstoff-Analyse oder den historischen (Fahrzeug-) Daten des Druckbehältersystems, sind gegebenenfalls Rückschlüsse über den Zustand des Druckbehältersystems möglich (z.B. Güte der Vakuumisolation, Zustand der Verstärkung des Innenbehälters, Art bzw. Grund einer Fahrzeugstörung, Restlebensdauer, etc..). Die erhaltenen bzw. bestimmten Daten können weiter ausgewertet, gespeichert und/oder angezeigt werden.

Ist die Steuerung nicht im Kraftfahrzeug integriert, ist sie eingerichtet, die Informationen aus einem Steuergerät des Kraftfahrzeuges (oft "Tankmaster" genannt), zum Beispiel der Steuerung des Druckbehältersystems, auszulesen. Dies kann über bekannte Kommunikationsverbindungen evtl. auch kabellos erfolgen.

Die Steuerung kann eingerichtet sein, das Druckbehältersystem so anzusteuern, dass der im Druckbehältersystem gespeicherte Brennstoff aus dem Kraftfahrzeug zumindest teilweise abgeführt wird. Bevorzugt wird der Druckbehälter bis zu einem minimalen Mindestdruck oder ganz entleert. Der minimale Mindestdruck kann beispielsweise der minimale Druck sein, der im Inneren des Druckbehälters immer vorhanden sein sollte, damit der Druckbehälter nicht beschädigt wird. Es handelt sich also bevorzugt um eine Vorrichtung zur halbautomatischen Entspannung des Druckbehälters.

Die Steuerung kann eingerichtet sein, nach dem Serviceeinsatz das Druckbehältersystem zumindest teilweise wieder mit Brennstoff zu befüllen. Hierzu kann die Servicevorrichtung selbst einen Brennstoffspeicher umfassen, bevorzugt einen kryogenen Hochdruckbehälter. Alternativ oder zusätzlich kann die Servicevorrichtung an einen externen Brennstoffspeicher angeschlossen sein, beispielsweise einen Speicher der Servicewerkstatt. Der Brennstoffspeicher ist fluidverbunden mit der Betankungskupplung. Fahrzeugseitig fließt der Brennstoff von der Betankungskupplung durch den Vorlauf in den Druckbehälter.

Die Steuerung kann eingerichtet sein, die Dichtheit des Druckbehältersystems zu prüfen. Hierzu kann beispielsweise vorgesehen sein, dass die Servicevorrichtung die zeitliche Änderung des Behälterdrucks direkt oder indirekt bestimmt. Ferner kann die Steuerung ausgebildet sein, einen Prüfdruck im Druckbehältersystem aufzubauen und/oder zu halten. Ein solcher Test ist beispielsweise nach einem Serviceeingriff sinnvoll, bevor also das Drucksystem wieder mit den regulären Betriebsdrücken betrieben wird.

Die Steuerung kann ferner eingerichtet sein den Druckbehälter zu Inertisieren. Hierzu kann die Steuerung beispielsweise eine Gasversorgung (z.B. in Druckflaschen) aufweisen. Beispielsweise kann als Inertgas Stickstoff oder Kohlendioxid eingesetzt werden. Bevorzugt wird zum Inertisieren mehrfach (z.B. drei oder fünf Wiederholungen) der Druckbehälter mit Inertgas bis zu einem gewissen Füllgrad bzw. Fülldruck gefüllt und dann wieder entleert. Bevorzugt wird der Druckbehälter nach dem Inertisieren und/oder nach dem Dichtheitstest mit einen Referenzdruck gefüllt. Ist das Druckbehältersystem inertisiert, enthält das System kein oder nur geringe Mengen an brennbarem Gas. Die Brandgefahr wird somit deutlich verringert bzw. ausgeschlossen.

Ferner kann die Vorrichtung eingerichtet sein, Helium, Stickstoff und/oder Wasserstoff, oder allgemein ein Prüfgas, zu speichern. Beispielsweise kann der Dichtheitstest mit einem der drei Gase durchgeführt werden, vorzugsweise mit Helium.

Bevorzugt umfasst die Vorrichtung einen Anschluss zur Brennstoffabfuhr in die Umgebung. Beispielsweise kann die Vorrichtung an einen werkstattseitigen Brennstoffabzug (z.B. ein Kamin) angeschlossen sein.

Vorteilhaft kann die Vorrichtung ausgebildet sein, die Reinheit des Brennstoffs zu ermitteln. Sofern der Brennstoff verunreinigt ist, kann es beispielsweise an den Anschluss zur Brennstoffabfuhr oder Brennstoffreinigungs- oder Verwertungseinheit (z.B. thermisch umwandeln, Turbine betreiben, etc.) geleitet werden. Falls der Brennstoff ausreichend rein ist (z.B. für den Betrieb in einer Brennstoffzelle geeignet), kann der Brennstoff in einen Brennstoffspeicher gespeichert werden.

Die Servicevorrichtung kann weitere Komponenten umfassen wie beispielsweise Filter, Ventile, Bedienpanel, Sensoren, Leitungen.

Vorteilhaft kann die Servicevorrichtung eine Batterie und eine Brennstoffzelle oder einen Verbrennungsmotor umfassen (evtl. mit Generator zum Aufladen einer Batterie). Die Brennstoffzelle und der Verbrennungsmotor sind zweckmäßig so ausgelegt, dass sie die Energie bereitstellen, die zum Betrieb der Servicevorrichtung benötigt wird. Bevorzugt kann dann auf eine externe Energieversorgung verzichtet werden. Der Verbrennungsmotor oder die Brennstoffzelle könnten mit dem Brennstoff aus dem zu enttankenden System betrieben werden und die Überschüssige Energie speichern (HV Speicher) oder ins Netz einspeisen.

Mit der hier offenbarten Technologie lassen sich Reparaturarbeiten und Wartungseingriffe sicher und reproduzierbar Durchführen. Zudem kann vorteilhaft die Servicezeit reduziert werden. Die ermittelten Fahrzeugdaten können einfach gespeichert werden für eine zukünftige Nutzung, z.B. bei späteren Servicearbeiten.

Die hier offenbarte Technologie wird auch durch folgendes Verfahren beschrieben:
Verfahren zum Service eines (CcH2- oder CGH2-) Druckbehältersystems von einem Kraftfahrzeug, umfassend die Schritte:
- Herstellen einer Fluidverbindung zwischen einer Servicevorrichtung (insbesondere eine Servicevorrichtung wie sie hier offenbart ist) und dem Druckbehälter, vorzugsweise durch Kuppeln des servicevorrichtungsseitiges Betankungskupplungsteil an das kraftfahrzeugseitige Betankungskupplungsteil des Kraftfahrzeuges; und
- Ansteuerung des Druckbehältersystems, vorzugsweise durch die hier offenbarte Steuerung.

Das Verfahren kann ferner mindestens einen der nachstehenden Schritte aufweisen:
- Verarbeiten von Informationen über den Zustand des Druckbehältersystems, insbesondere Druck-, Temperatur- und Füllstandsinformationen;
- Auslesen der Informationen aus einem Steuergerät des Kraftfahrzeuges;
- Ansteuern des Druckbehältersystems, so dass der im Druckbehältersystem gespeicherte Brennstoff aus dem Kraftfahrzeug zumindest teilweise abgeführt wird;
- Zumindest teilweises Befüllen des Druckbehältersystems nach dem Serviceeinsatz mit Brennstoff;
- Prüfen der Dichtheit des Druckbehältersystems;
- Inertisieren und Druckwechselspülen des Druckbehältersystems;
- Analyse des Brennstoffs, der dem Druckbehältersystem entnommen wurde; und/oder
- Weiterleiten des Brennstoffs an einen Anschluss zur Brennstoffabfuhr oder an einen Brennstoffspeicher in Abhängigkeit von der Qualität (z.B. Reinheit) des Brennstoffs.

Bevorzugt werden die hier offenbarten Verfahren durch die hier offenbarte Servicevorrichtung, insbesondere deren Steuerung, durchgeführt. Die einzelnen Schritte der hier offenbarten Verfahren können in beliebiger Reihenfolge durchgeführt werden. Die Anordnung der einzelnen Schritte in der Beschreibung und in den Ansprüchen ist nicht einschränkend auszulegen. Sofern bei der hier offenbarten Technologie die Rede davon ist, dass die Steuerung eingerichtet ist, eine Funktion oder einen Vorgang auszuüben, so soll gleichzeitig mit umfasst sein, dass die Servicevorrichtung insgesamt eingerichtet ist, die Funktion oder einen Vorgang auszuüben.

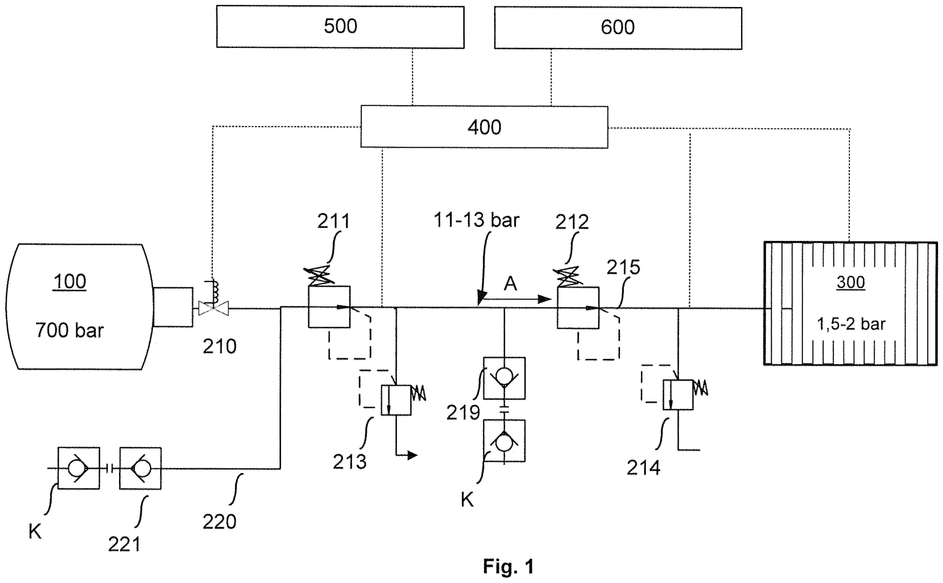

Die Fig. 1 zeigt schematisch das hier offenbarte Druckbehältersystem. In dem Druckbehälter 200 ist Brennstoff gespeichert, z.B. Wasserstoff bei 700 bar. Der Druckbehälter 200 stellt Wasserstoff bereit für einen Brennstoffzellenstapel mit einer Vielzahl an Brennstoffzellen 300, welche auf einem niedrigeren Druckniveau betrieben werden, z.B. 0,5 bis 1 barü (= Überdruck gegenüber dem Atmosphärendruck). An einem Ende des Druckbehälters 200 ist ein Absperrventil 210 vorgesehen. Anstatt lediglich einem Druckbehälter 200 mit einem Absperrventil 210 könnten ebenso mehrere Druckbehälter 200 mit mehreren Absperrventilen 210 vorgesehen sein. In dem hier dargestellten System sind ferner zwei Druckstufen vorgesehen, welche jeweils mit einem Druckminderer 211, 212 arbeiten. Die erste Druckstufe senkt den Druck von 700 bar auf ein Mitteldruckniveau von beispielsweise 11 bis 13 bar (Mitteldruckbereich). Die zweite Druckstufe senkt den Druck vom Mitteldruck auf den Niederdruck der Brennstoffzellen. Als erster Druckminderer 211 wird hier ein mechanischer Proportionaldruckregler eingesetzt. In der zweiten Druckstufe können verschiedene Technologien für den zweiten Druckregler 212 zum Einsatz kommen, z.B. Injektoren, Venturidüsen und mechanische Druckregler. Um ein Bersten der Rohrleitungen bei Fehlfunktion der Druckminderer 211, 212 zu verhindern ist auf der Mittel- und Niederdruckseite jeweils ein Druckentlastungsventil 213, 214 vorgesehen. Während der Betankung des Druckbehältersystems strömt durch das kraftfahrzeugseitige Betankungskupplungsteil 221 und den Betankungsleitungsabschnitt 220 Brennstoff in den Druckbehälter 200. Ferner ist ein Service-Port 219 vorgesehen. Der Service-Port 219 ist im Mitteldruckbereich angeordnet und dient der Enttankung des Druckbehältersystems. Das servicevorrichtungsseitige Betankungskupplungsteil K der Servicevorrichtung kann an das kraftfahrzeugseitige Betankungskupplungsteil 221 und/oder an den Service-Port 219 anschließbar sein. Die hier gezeigten Komponenten mit den Bezugszeichen 211, 212, 213, 214, 215, 219, 220, und 221 (und teilweise) 300 sind Bestandteil des Anodensubsystems A. Die Strömungsrichtung des Brennstoffs ist hier mit einem Pfeil dargestellt.

Ferner umfasst das hier gezeigte Druckbehältersystem ein Steuergerät 400, welches eingerichtet ist, das Druckbehältersystem zu steuern. Das Steuergerät 400 ist mit einem übergeordneten Steuergerät 500 des Kraftfahrzeuges verbunden oder in dieser integriert. Die Informationen bzgl. des Druckbehältersystems können vom Steuergerät 400 oder von dem übergeordneten Steuergerät 500 an eine Diagnoseschnittstelle 600 übertragen werden, an die die Servicevorrichtung anschließbar ist. Alternativ oder zusätzlich kann die Servicevorrichtung an eines der Steuergeräte 400, 500 anschließbar sein.

Das serviceseitige Betankungskupplungsteil K kann ausgebildet sein, ein Rückschlagventil des kraftfahrzeugseitigen Betankungskupplungsteils 221 oder des Service-Ports 219 zu öffnen, so dass der mindestens eine Druckbehälter enttankt werden kann. Beispielsweise kann dies mechanisch geschehen, beispielsweise indem ein Stift im Betankungskupplungsteil K den Versperrmechanismus entgegen der Schließrichtung des Rückschlagventils aufdrückt.

Vorteilhaft kann die Servicevorrichtung das Druckbehältersystem derart ansteuern, das ein Ventil des Anodensubsystems die Brennstoffzufuhr zur mindestens einen Brennstoffzelle unterbindet. Vorteilhaft kann dann der Druckbehälter über den Betankungsleitungsabschnitt sicher enttankt werden, ohne dass das ganze System enttankt werden muss. Parallel könnte über den Service-Port 219 der Teil des Anodensubsystems weiter betrieben werden, der stromab vom Ventil angeordnet ist. Beispielsweise könnte die Brennstoffzelle für weitere Tests betrieben werden. Auch könnte zu einem späteren Zeitpunkt dieser Teil des Anodensubsystems separat enttankt werden.

In der Fig. 1 ist ein CGH2-System gezeigt. Die offenbarte Technologie ist jedoch ebenso auf ein CcH2-System anwendbar.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

## Patentansprüche

1. Servicevorrichtung für ein Druckbehältersystem eines Kraftfahrzeuges, umfassend:
- ein servicevorrichtungsseitiges Betankungskupplungsteil (K), das eingerichtet ist, mit einem kraftfahrzeugseitigen Betankungskupplungsteil (221) und/oder mit einem Service-Port (219) des Kraftfahrzeuges verbunden zu werden; und
- eine Steuerung zur elektrischen und/oder elektronischen Ansteuerung des Druckbehältersystems.

2. Servicevorrichtung nach Anspruch 1, wobei die Steuerung eingerichtet ist, Informationen über den Zustand des Druckbehältersystems, insbesondere Druck-, Temperatur- und Füllstandsinformationen, zu verarbeiten; und/oder wobei die Steuerung eingerichtet ist, Reglersignale und/oder Steuersignale an das Steuergerät des Druckbehältersystems zur Steuerung und/oder Regelung einer Aktuatorik (210) des Druckbehältersystems zu senden.

3. Servicevorrichtung nach Anspruch 2, wobei die Steuerung eingerichtet ist, zumindest die Aktuatorik (210) des Druckbehältersystems anzusteuern.

4. Servicevorrichtung nach Anspruch 3, wobei die Aktuatorik (210) ein Absperrventil (210) eines Druckbehälters (200) des Druckbehältersystems ist.

5. Servicevorrichtung nach einem der vorherigen Ansprüche, wobei die Steuerung eingerichtet ist,
- das Druckbehältersystem so anzusteuern, dass der im Druckbehältersystem gespeicherte Brennstoff aus dem Kraftfahrzeug zumindest teilweise abgeführt wird;
- den Druckbehälter (100) des Druckbehältersystems bis zu einem minimalen Mindestdruck oder ganz zu entleeren; und/oder
- die Dichtheit des Druckbehältersystems zu prüfen.

6. Servicevorrichtung nach einem der vorherigen Ansprüche, wobei die Steuerung ausgebildet ist, einen Prüfdruck im Druckbehältersystem aufzubauen und/oder zu halten.

7. Servicevorrichtung nach einem der vorherigen Ansprüche, wobei die Steuerung eingerichtet ist,
- das Druckbehältersystem zu inertisieren;
- eine Druckwechselspülung durchzuführen; und/oder
- für den Service von einem kryogenen Druckbehältersystem.

8. Servicevorrichtung nach einem der vorherigen Ansprüche, wobei die Servicevorrichtung eine Brennstoff-Analysevorrichtung aufweist.

9. Servicevorrichtung nach einem der vorherigen Ansprüche, wobei die Servicevorrichtung nicht eine zur Betankung eines Druckbehältersystems ausgebildete Tankstelle ist.

10. Servicevorrichtung nach einem der vorherigen Ansprüche, wobei die Servicevorrichtung eine Servicevorrichtung ist, die für Reparaturarbeiten, Wartungsarbeiten und/oder regelmäßige Kontrollen einsetzbar ist.

11. Servicevorrichtung nach einem der vorherigen Ansprüche, wobei die Servicevorrichtung einen Anschluss zur Brennstoffabfuhr in die Umgebung aufweist.

12. Servicevorrichtung nach einem der vorherigen Ansprüche, wobei die Steuerung der Servicevorrichtung ausgebildet ist, Steuersignale an das Steuergerät (400, 500) des Kraftfahrzeuges zu senden, um basierend auf diesen Steuersignalen die zumindest eine Aktuatorik (210) anzusteuern.

13. Servicevorrichtung nach einem der vorherigen Ansprüche, wobei die Steuerung der Servicevorrichtung an eine Diagnoseschnittstelle (600) des Kraftfahrzeuges anschließbar ist, die ebenfalls als Diagnoseschnittstelle für andere Fahrzeugparameter dient, die nicht das Druckbehältersystem betreffen.

14. Servicevorrichtung nach einem der vorherigen Ansprüche, wobei das serviceseitige Betankungskupplungsteil (K) ausgebildet ist, ein Rückschlagventil des kraftfahrzeugseitigen Betankungskupplungsteils (221) oder des Service-Ports (219) zu öffnen, so dass das Druckbehältersystem enttankt werden kann.

15. Verfahren zum Service eines Druckbehältersystems von einem Kraftfahrzeug, umfassend die Schritte:
- Herstellen einer Fluidverbindung zwischen einer Servicevorrichtung und dem Druckbehälter; und
- elektrische und/oder elektronische Ansteuerung des Druckbehältersystems.

## Claims

1. Service device for a pressure vessel system of a motor vehicle, comprising:
- a service-device-side refuelling coupling part (K) which is designed to be connected to a motor-vehicle-side refuelling coupling part (221) and/or to a service port (219) of the motor vehicle; and
- a controller for electrically and/or electronically activating the pressure vessel system.

2. Service device according to Claim 1, wherein the controller is designed to process information about the state of the pressure vessel system, in particular pressure, temperature and filling level information; and/or wherein the controller is designed to send controller signals and/or control signals to the control unit of the pressure vessel system in order to control an actuator system (210) of the pressure vessel system with open-loop or closed-loop control.

3. Service device according to Claim 2, wherein the controller is designed to activate at least the actuator system (210) of the pressure vessel system.

4. Service device according to Claim 3, wherein the actuator system (210) is a shut-off valve (210) of a pressure vessel (200) of the pressure vessel system.

5. Service device according to one of the preceding claims, wherein the controller is designed
- to activate the pressure vessel system in such a manner that the fuel stored in the pressure vessel system is at least partially removed from the motor vehicle;
- to empty the pressure vessel (100) of the pressure vessel system up to a minimal minimum pressure or entirely; and/or
- to test the tightness of the pressure vessel system.

6. Service device according to one of the preceding claims, wherein the controller is designed to build up and/or to maintain a test pressure in the pressure vessel system.

7. Service device according to one of the preceding claims, wherein the controller is designed
- to inert the pressure vessel system;
- to carry out pressure change scavenging; and/or
- for the service of a cryogenic pressure vessel system.

8. Service device according to one of the preceding claims, wherein the service device has a fuel analysis device.

9. Service device according to one of the preceding claims, wherein the service device is not a filling station designed for refuelling a pressure vessel system.

10. Service device according to one of the preceding claims, wherein the service device is a service device which is usable for repair work, maintenance work and/or regular checks.

11. Service device according to one of the preceding claims, wherein the service device has a connection for removing fuel into the surroundings.

12. Service device according to one of the preceding claims, wherein the controller of the service device is designed to send control signals to the control unit (400, 500) of the motor vehicle in order to activate the at least one actuator system (210) on the basis of said control signals.

13. Service device according to one of the preceding claims, wherein the controller of the service device is connectable to a diagnostic interface (600) of the motor vehicle, which also serves as a diagnostic interface for other vehicle parameters which do not relate to the pressure vessel system.

14. Service device according to one of the preceding claims, wherein the service-side refuelling coupling part (K) is designed to open a non-return valve of the motor-vehicle-side refuelling coupling part (221) or of the service port (219) such that the pressure vessel system can be defuelled.

15. Method for the service of a pressure vessel system of a motor vehicle, comprising the steps:
- producing a fluid connection between a service device and the pressure vessel; and
- activating the pressure vessel system electrically and/or electronically.

## Revendications

1. Dispositif de service pour un système de réservoir sous pression d'un véhicule automobile, comprenant :
- une partie d'accouplement de ravitaillement côté dispositif de service (K), qui est adaptée pour être reliée à une partie d'accouplement de ravitaillement côté véhicule automobile (221) et/ou à un port de service (219) du véhicule automobile ; et
- une commande pour la commande électrique et/ou électronique du système de réservoir sous pression.

2. Dispositif de service selon la revendication 1, dans lequel la commande est adaptée pour traiter des informations sur l'état du système de réservoir sous pression, notamment des informations de pression, de température et de niveau de remplissage ; et/ou dans lequel la commande est adaptée pour envoyer des signaux de régulation et/ou des signaux de commande à l'appareil de commande du système de réservoir sous pression pour commander et/ou réguler un actionneur (210) du système de réservoir sous pression.

3. Dispositif de service selon la revendication 2, dans lequel la commande est adaptée pour commander au moins l'actionneur (210) du système de réservoir sous pression.

4. Dispositif de service selon la revendication 3, dans lequel l'actionneur (210) est une soupape d'arrêt (210) d'un réservoir sous pression (200) du système de réservoir sous pression.

5. Dispositif de service selon l'une quelconque des revendications précédentes, dans lequel la commande est adaptée
- pour commander le système de réservoir sous pression de manière à ce que le carburant stocké dans le système de réservoir sous pression soit au moins partiellement évacué du véhicule automobile ;
- pour vider le réservoir sous pression (100) du système de réservoir sous pression jusqu'à une pression minimale ou complètement ; et/ou
- pour vérifier l'étanchéité du système de réservoir sous pression.

6. Dispositif de service selon l'une quelconque des revendications précédentes, dans lequel la commande est configurée pour établir et/ou maintenir une pression de test dans le système de réservoir sous pression.

7. Dispositif de service selon l'une quelconque des revendications précédentes, dans lequel la commande est adaptée
- pour rendre inerte le système de réservoir sous pression ;
- pour effectuer un rinçage à pression alternée ; et/ou
- pour le service d'un système de réservoir sous pression cryogénique.

8. Dispositif de service selon l'une quelconque des revendications précédentes, dans lequel le dispositif de service présente un dispositif d'analyse de carburant.

9. Dispositif de service selon l'une quelconque des revendications précédentes, dans lequel le dispositif de service n'est pas une station-service configurée pour ravitailler un système de réservoir sous pression.

10. Dispositif de service selon l'une quelconque des revendications précédentes, dans lequel le dispositif de service est un dispositif de service qui peut être utilisé pour des opérations de réparation, des opérations de maintenance et/ou des contrôles périodiques.

11. Dispositif de service selon l'une quelconque des revendications précédentes, dans lequel le dispositif de service présente un raccord pour l'évacuation de combustible dans l'environnement.

12. Dispositif de service selon l'une des revendications précédentes, dans lequel la commande du dispositif de service est configurée pour envoyer des signaux de commande à l'appareil de commande (400, 500) du véhicule automobile pour commander l'au moins un actionneur (210) sur la base de ces signaux de commande.

13. Dispositif de service selon l'une quelconque des revendications précédentes, dans lequel la commande du dispositif de service peut être raccordée à une interface de diagnostic (600) du véhicule automobile, qui sert également d'interface de diagnostic pour d'autres paramètres du véhicule qui ne concernent pas le système de réservoir sous pression.

14. Dispositif de service selon l'une quelconque des revendications précédentes, dans lequel la partie d'accouplement de ravitaillement côté service (K) est configurée pour ouvrir une soupape anti-retour de la partie d'accouplement de ravitaillement côté véhicule automobile (221) ou du port de service (219), de telle sorte que le système de réservoir sous pression peut être vidangé.

15. Procédé d'entretien d'un système de réservoir sous pression d'un véhicule automobile, comprenant les étapes suivantes :
- l'établissement d'une communication fluidique entre un dispositif de service et le réservoir sous pression ; et
- la commande électrique et/ou électronique du système de réservoir sous pression.
